# FASCICULE DE BREVET EUROPEEN

(11) **EP 3 083 791 B1**
(45) Date de publication et mention de la délivrance du brevet: **31.01.2018**
(21) Numéro de dépôt: 14827803.9
(22) Date de dépôt: 09.12.2014
(51) Int. Cl.: C08K 3/22, C09K 21/02, H01B 3/44, H01B 7/295

(54) **COMPOSITIONS THERMOPLASTIQUES IGNIFUGÉES, EN PARTICULIER POUR LES CÂBLES ÉLECTRIQUES**
FEUERFESTE THERMOPLASTISCHE ZUSAMMENSETZUNGEN, INSBESONDERE FÜR STROMKABEL
FIREPROOF THERMOPLASTIC COMPOSITIONS, IN PARTICULAR FOR ELECTRIC CABLES

(30) Priorité: 18.12.2013 FR 1362853
(43) Date de publication de la demande: 26.10.2016
(73) Titulaire: Arkema France, 92700 Colombes (FR)
(72) Inventeur: SAVIGNAT, Benoît, 27300 Bernay (FR); QUINEBECHE, Sébastien, 27300 Bernay (FR); LOERCH, Elisabeth, 27170 Barc (FR); PALLUAULT, Vincent, 27300 BERNAY (FR)
(74) Mandataire: Gorintin, Sarah
(86) Numéro de dépôt international: PCT/FR2014/053224
(87) Numéro de publication internationale: WO 2015/092209

(56) Documents cités:
- EP-A1- 0 893 469
- CN-A- 101 712 875
- FR-A1- 2 870 542
- FR-A1- 2 985 731
- US-A1- 2013 240 239

## Description

### Domaine de l'invention

L'invention a pour objet des compositions ignifugées thermoplastiques, en particulier utilisées dans des structures multicouches. La présente invention concerne également l'utilisation de cette composition en tant que couche de revêtement (couche extérieure) dans un câble, tuyau ou analogue ainsi qu'en tant que matériau constitutif (couche intérieure) d'une gaine de protection.

Ces compositions sont utiles en câblerie pour isoler et protéger des câbles électriques, des fibres optiques ou des conduits transportant des fluides, tels que des liquides frigorigènes ou des huiles. Dans les applications comme le recouvrement de câbles électriques, pièces électriques et électrotechniques, automobile, outre leur caractère isolant électrique, les matériaux doivent avant tout posséder de haut niveau de résistance au feu (ignifugation). Les installations électriques peuvent en effet être à l'origine de courts circuits et s'enflammer, elles peuvent être aussi mises au contact d'une flamme et donc s'enflammer et propager l'incendie le long des chemins de câbles.

Les polymères thermoplastiques tels que les polyéthylènes, les polyamides ou leurs mélanges sont de bons isolants électriques et sont faciles à mettre en oeuvre. Ils sont utilisés pour faire des boîtiers et des connecteurs électriques et aussi des revêtements de câbles.

Le PVC (« Polychlorure de Vinyle ») représente également une solution largement utilisée. Cependant le PVC s'il permet d obtenir des composants souples et bons marché, contient des halogénés. Les composants PVC sont connus pour dégager une quantité importante de fumées opaques et toxiques qui limitent son usage en tant que composant ignifuge dans les locaux et habitations occupées/habitées en particulier par des personnes humaines. Il laisse en effet peu de temps pour l'évacuation en cas d'incendie.

Les qualités ignifuges d'une composition sont classiquement mesurées par le test de l'Indice Limite d'Oxygène ou LOI pour « Limiting Oxygen Index ». La mesure de l'indice limite d'oxygène permet de déterminer la concentration en oxygène minimale dans un mélange oxygène / azote qui permet d'entretenir la combustion d'un plastique en position vertical, avec un allumage en haut de l'échantillon. L'inflammabilité des matériaux est ainsi quantitativement caractérisée.

Pour un résultat au test LOI inférieur à 10%, la composition brûle très facilement. Pour des résultats au test LOI compris entre 21% et 30%, la composition brûle mais s'éteint d'elle-même après un laps de temps plus ou moins long. Dans le domaine de la câblerie, pour la couche ignifuge (un câble étant généralement formé d'une pluralité de couches parallèles), le résultat au test LOI ne doit pas être inférieur à 35%, ce qui correspond à une extinction spontanée ou immédiate de la combustion de la composition.

Il existe différents additifs pour rendre une matière plastique ininflammable, certains à base de produits halogénés, d'autres sans halogène.

L'utilisation de dérivés halogénés présente le grand inconvénient de conduire, lors de la combustion, à des gaz toxiques et corrosifs. Ainsi, comme cela est le cas dans le cadre de la présente invention, les fabricants et transformateurs se sont alors dirigés vers la mise au point de compositions contenant des oxydes, hydroxydes ou sels minéraux de métaux tels que les hydroxydes d'aluminium et de magnésium. L'ajout de ces matériaux confèrent des propriétés ignifuges mais dégradent les propriétés mécaniques de la composition thermoplastique les incluant.

Outre la résistance au feu, pré-requis pour ces compositions ignifuges en câblerie, ces compositions doivent présenter des qualités mécaniques optimums.

Les qualités mécaniques recherchées sont celles correspondant à des (très) bonnes propriétés relativement à la contrainte à la rupture et vis-à-vis de l'allongement à la rupture.

Les charges ignifugeantes étant présentes dans des quantités importantes, afin de satisfaire aux propriétés ignifugeantes du tuyau, câble ou analogue, il est nécessaire que la matrice (incluant les charges) confère à la composition le maximum de souplesse ; étant entendu que les charges ignifugeantes tendent à rigidifier ladite composition. Pour mesurer une souplesse, en particulier relativement au procédé de fabrication de la composition et la formation d'une structure multicouche incluant la composition ou une couche de cette composition, l'allongement à la rupture est une donnée importante et il faut qu'il soit généralement supérieur à une valeur prédéterminée.

Les compositions ignifuges utilisées en câblerie sont utilisées dans une large mesure pour recouvrir des câbles de faible puissance et petite section qui composent l'essentiel des câbles présents dans les habitations et lieux accueillant du public.

Ces câbles de faible section pour des raisons de souplesse et de coût sont revêtus avec une haute productivité et avec une faible épaisseur ; il est pour cela primordial de disposer d'une composition ignifuge de viscosité faible, les hautes viscosités ne le permettant pas.

La viscosité est communément caractérisée dans le monde des polymères avec le MFI (« Melt Flow Index »)

Un dernier critère fondamental réside dans le coût de fabrication/obtention de la composition, étant entendu qu'il est nécessaire de proposer une solution parfaite sur un plan technique tout en diminuant au plus les coûts.

Il n'existe pas sur le marché, à l'heure actuelle, de compositions thermoplastiques présentant des caractéristiques de hautes performances pour l'ensemble de ces propriétés combinées (viscosité, propriétés mécaniques et ignifuges) pouvant rivaliser en prix avec les composants PVC.

### Etat de l'art

On connait à l'heure actuelle des compositions pour câbles comportant un copolymère ethylène-acétate de vinyle, un polyéthylène, un agent de couplage et des charges ignifugeantes non halogénées mais de telles solutions ne sont pas tout à fait satisfaisantes, en particulier du point de vue de viscosité et de l'allongement à la rupture.

On connaît également le document EP 2985731, déposé au nom de la demanderesse, qui divulgue une composition ignifuge sans halogène comportant, dans un exemple de réalisation, un copolymère d'éthylène-acétate de vinyle, un polyéthylène, un copolymère d'éthylène et d'un monomère éthylénique portant une fonction polaire comportant une pluralité de greffons d'anhydride maléique, un agent de couplage et des charges ignifuges précipité.

Une telle composition présente l'inconvénient de son coût important lié à l'utilisation de charges ignifuges précipitées. D'autre part, le simple remplacement des charges précipitées par des charges ignifuges moins couteuses ayant le même mécanisme ignifuge ne permet pas d'obtenir les caractéristiques mécaniques recherchées ni une viscosité suffisamment faible pour un revêtement économiquement viable. CN101712875A divulgue une isolation ignifugée pour des câbles comprenant une polyoléfine greffée avec un groupe polaire pour améliorer les propriétés mécaniques de la composition thermoplastique.

### Brève description de l'invention

Après expérimentations, la demanderesse a découvert, de façon surprenante, qu'une composition ignifugée sans halogène associant, dans des proportions particulières, une pluralité de polymères spécifiques ainsi que des charges ignifugeantes d'une nature particulière, permet de conférer à la composition ignifuge, la viscosité requise tout en améliorant les propriétés mécanique et ignifuge.

La présente invention concerne ainsi une composition thermoplastique ignifugée sans halogène caractérisée en ce qu'elle consiste en :
- 50 % à 75 % en poids de charges ignifugeantes,
- 15 % à 40 % en poids d'un copolymère d'éthylène et d'un monomère éthylénique portant une fonction polaire,
- 5 % à 15 % en poids d'un polyéthylène non fonctionnalisé consistant en un polyéthylène à très basse densité (VLDPE) présentant une densité comprise entre 0,85 et 0,91,
- et 1,5 % à 6 % en poids d'un copolymère d'éthylène et d'un monomère éthylénique portant une fonction polaire ayant une MFI supérieure à 60 g.10 min⁻¹ à 190°C sous 2,16 kg ou d'un copolymère d'éthylène et d'un monomère éthylénique portant une fonction polaire et comportant une pluralité de greffons d'anhydride maléique,
- de 2 % à 15 % en poids d'un agent de couplage comprenant, de préférence consistant en, une polyoléfine greffée anhydride maléique et/ou un terpolymère éthylène-acrylate-anhydride maléique,
- optionnellement, jusqu'à 5% en poids d'additifs fonctionnels,
caractérisée en ce que les charges ignifugeantes sont des charges minérales hydratées naturelles choisies parmi la gibbsite (hydroxyde d'aluminium), l'hydromagnésite, la dawsonite, la brucite (hydroxyde de magnésium), le subhydrate carbonate de magnésium, la boehmite, l'hydroxyde de calcium ou la huntite ou un mélange de ces composés.

Par rapport à la solution actuelle disponible sur le marché, la composition thermoplastique selon l'invention permet également un gain de coût très conséquent car les charges ignifuges utilisées sont bien plus économiques que celles plus classiques.

Les charges ignifuges utilisées ici sont des charges minérales hydratées naturelles. Or, de telles charges présentent classiquement un polydispersité ou hétérogénéité telle (au niveau de la granulométrie desdites charges), et également au niveau du diamètre moyen des charges, qu'elles induisent généralement une viscosité élevé et de faibles propriétés mécaniques.

En utilisant de telles charges, certes économiques mais néfastes tant pour la viscosité que pour les propriétés mécaniques, dans une ou plusieurs polyoléfines classiques, il était impossible d'obtenir une composition un tant soit peu satisfaisante, en particulier pour une utilisation en câblerie. L'invention a réussi, avec de telles charges utilisées dans une forte proportion, à maintenir voire augmenter les propriétés mécanique et de viscosité de la composition par rapport à celles de l'art antérieur, tout en bien sûr conservant la propriété ignifuge extrêmement performante.

D'autres caractéristiques avantageuses de l'invention sont précisées dans la suite :
- de préférence, la polyoléfine greffée de l'agent de couplage consiste en un polyéthylène choisi parmi les VLDPE, LLDPE, LDPE, MDPE, HDPE ou un copolymère éthylénique portant une fonction polaire ou un polypropylène homopolymère ou copolymère d'éthylène.
- avantageusement, le taux de greffage de l'anhydride maléique sur la polyoléfine varie de 0,25 % à 4 % en masse de la polyoléfine greffé.
- selon une particularité de l'invention, le copolymère d'éthylène et d'un monomère éthylénique portant une fonction polaire est présent dans la composition entre 15 % et 28 % en poids, de préférence entre 20 % et 25 %.
- selon une particularité de l'invention, le susdit polyéthylène non fonctionnalisé est compris entre 4 % et 12 % en poids de la composition, de préférence entre 6 % et 10 %.
- selon une particularité de l'invention, les différents susdits monomères éthyléniques portant une fonction polaire comprennent tous de 3 à 20 atomes de carbone, préférentiellement de 4 à 8 atomes.
- selon une particularité de l'invention, le susdit monomère éthylénique portant une fonction polaire est choisi parmi les esters vinyliques d'acide carboxylique saturé, les acides carboxyliques insaturés ou les esters (méth)acryliques d'acide carboxylique insaturé.
- selon une particularité de l'invention, les additifs sont choisis parmi les agents antivieillissements, antioxydants, protecteurs solaires, antibloquants, absorbeurs UV, plastifiants, mouillants, anti-mousse, d'étalement et/ou tackifiant.
- selon une particularité de l'invention, les susdites charges ignifugeantes représentent plus de 60 % en poids de la composition.

La présente invention concerne plus particulièrement, mais non exclusivement, un câble ou tuyau présentant au moins deux couches dont au moins une couche est formée par la susdite composition thermoplastique tel qu'énoncée ci-dessus.

### Description détaillée de l'invention

La présente invention concerne une composition ignifuge dans laquelle on trouve, outre des additifs fonctionnels éventuellement présents, quatre composants thermoplastiques spécifiques ainsi que des charges ignifugeantes bien particulières dont l'association, dans des quantités déterminées, permet de résoudre les problèmes des compositions ignifuges de l'art antérieur, en particulier dans leurs applications à des câbles, tubes, tuyaux ou analogues.

Ces quatre composants thermoplastiques sont :
1. un copolymère d'éthylène et d'un monomère éthylénique portant une fonction polaire,
2. un polyéthylène non fonctionnalisé consistant en un polyéthylène à très basse densité (VLDPE) présentant une densité comprise entre 0,85 et 0,91,
3. un copolymère d'éthylène et d'un monomère éthylénique portant une fonction polaire ayant un MFI supérieure à 60 g.10 min⁻¹ à 190°C sous 2,16 kg (soixante grammes par dix minutes à une température de 190°C sous 2,16 kilo) ou un copolymère d'éthylène et d'un monomère éthylénique portant une fonction polaire et comportant une pluralité de greffons d'anhydride maléique,
4. un agent de couplage comprenant une polyoléfine greffée anhydride maléique et/ou un terpolymère éthylène-acrylate-anhydride maléique.

S'agissant du premier composant thermoplastique susvisé, il pourra consister en un éthylène-acétate de vinyle (EVA), un éthylène-butyl acrylate (EBA), un éthylène-méthyle acrylate (EMA), un éthylène-éthyle-acrylate (EEA), un copolymère éthylène-acrylate de méthyle vendu sous la marque Lotryl®.

S'agissant du deuxième composant thermoplastique susvisé, à savoir le polyéthylène non fonctionnalisé, on entend par polyéthylène des homo- ou copolymères. A titre de comonomères, on peut citer les alpha-oléfines, avantageusement celles ayant de 3 à 30 atomes de carbone. Des exemples d'alpha oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.

Le polyéthylène non fonctionnalisé consistera de préférence en un polyéthylène à très basse densité (VLDPE) présentant une densité comprise entre 0,85 et 0,91.

S'agissant du troisième composant susvisé, il pourra consister en un thermoplastique identique à celui choisi pour le premier composant mais dont la MFI sera supérieure à 60 g.10 min⁻¹ à 190°C sous 2,16 kg.

Si ce troisième composant consiste en un copolymère d'éthylène et d'un monomère éthylénique portant une fonction polaire et comportant une pluralité de greffons d'anhydride maléique.

Le greffage de l'anhydride maléique est une opération connue en soi par l'homme du métier. Le taux de greffage de l'anhydride maléique, c'est-à-dire le nombre d'unités de monomère d'anhydride maléique dans le polymère greffé, est variable suivant le copolymère considéré et peut varier de 0,1 % à 4 % en poids, préférentiellement de 0,4 % à 2 % en poids du copolymère greffé.

S'agissant du copolymère d'éthylène et d'un monomère éthylénique portant une fonction polaire, on entend par monomère éthylénique, un monomère comprenant une insaturation susceptible de réagir avec l'éthylène dans un procédé par voie radicalaire. Par fonction polaire, on entend une fonction présentant un moment dipolaire, tel que les fonctions amine, alcool, uréthane, acide ou ester. Préférentiellement, la fonction polaire est une fonction acide ou une fonction ester.

Le monomère éthylénique portant une fonction polaire comprend préférentiellement de 3 à 20 atomes de carbone, préférentiellement de 4 à 8 atomes de carbone.

A titre d'exemple de copolymère, on peut citer les copolymères d'éthylène et d'un ester vinylique d'acide carboxylique, les copolymères d'éthylène et d'un acide carboxylique insaturé ou encore les copolymères d'éthylène et d'un acrylate et ou d'un méthacrylates d'alkyle, regroupés dans la présente demande sous le terme (méth)acrylate d'alkyle. Avantageusement, le monomère éthylénique peut être choisi parmi l'acétate de vinyle et les (méth)acrylates de méthyle, d'éthyle ou de butyle.

La quantité massique en monomère éthylénique par rapport à la masse totale du copolymère peut être comprise dans la gamme allant de 1 % à 70 %, avantageusement de 10 % à 60 % et préférentiellement de 20 % à 45 %.

Selon l'invention, les quantités des différents monomères présents dans le copolymère peuvent être mesurées par spectroscopie infrarouge en utilisant la norme ISO8985 (1998). La température de ramollissement du copolymère peut être mesurée par la Norme ASTM E 28-99 (2004).

On peut utiliser les procédés dits de polymérisation radicalaire fonctionnant habituellement à des pressions entre 200 et 2 500 bars. Ces procédés sont mis en oeuvre industriellement en utilisant deux types principaux de réacteurs : un réacteur de type autoclave ou un réacteur de type tubulaire. Ces procédés de polymérisation connus de l'homme du métier et on peut utiliser par exemple les procédés décrits dans les documents FR 2498609, FR 2569411 et FR 2569412. L'homme du métier sait dans quelles proportions utiliser chacun des monomères pour obtenir le copolymère, d'éthylène et d'un monomère éthylénique portant une fonction polaire, utilisé dans l'invention.

Ces copolymères sont commercialisés par la demanderesse sous les marques EVATANE® et LOTRYL®.

S'agissant du quatrième composant thermoplastique, à savoir l'agent de couplage, il pourra consister en, ou comprendre, une polyoléfine greffée anhydride maléique et/ou un terpolymère éthylène-acrylate-anhydride maléique.

Concernant la polyoléfine envisagée dans ce troisième composant, on définit une polyoléfine comme un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE (« Low Density Polyethylene », ou polyéthylène basse densité), HDPE (« High Density Polyethylene », ou polyethylene haute densité), LLDPE (« Linear Low Density Polyethylene », ou polyéthylène basse densité linéaire), MDPE (« Middle Density Polyethylene », ou polyéthylène de densité moyenne), VLDPE (« Very Low Density Polyéthylène », ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylène-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

S'agissant de l'agent ignifugeant, il sera exclusivement choisi parmi les charges minérales hydratées naturelles choisies parmi la gibbsite (hydroxyde d'aluminium), l'hydromagnésite, la dawsonite, la brucite (hydroxyde de magnésium), le subhydrate carbonate de magnésium, la boehmite, l'hydroxyde de calcium ou la huntite ou un mélange de ces composés. En effet, la présente invention n'a contesté la résolution de l'ensemble des problèmes techniques, ainsi que la contrainte économique, qu'avec ce type de charges et celles énumérées limitativement en particulier.

La composition selon l'invention peut comprendre (éventuellement) des additifs dans une proportion minoritaire, de l'ordre de 0,1% à 5% en poids et de préférence de 1% à 3% en poids de la composition.

La composition peut ainsi comprendre un ou plusieurs agent(s) antivieillissement. Les agents antivieillissement susceptibles d'être utilisés dans le cadre de l'invention sont choisis avantageusement parmi les agents antioxydants primaires ou secondaires, les amines à encombrement stérique ou HALS (« Hindered Amine Light Stabilizers »). Il est possible d'utiliser plusieurs agents du même type, ou bien un mélange d'agents de types différents.

Les agents antioxydants primaires préviennent la dégradation du matériau en absorbant les radicaux libres formés sous l'action de la chaleur. Les agents antioxydants secondaires empêchent la dégradation du matériau en absorbant les hydropéroxydes formés dans le milieu par réaction de radicaux peroxydes avec le polymère.

A titre d'exemples d'agents antioxydants susceptibles d'être utilisés dans le cadre de l'invention, on peut citer les antioxydants phénoliques (Irganox® 1010, 1135 de Ciba Specialty Chemicals), aminiques (Irganox® 5057), les phosphites (Irgafos® 168) et les thioéthers.

Les protecteurs solaires tels que les amines à encombrement stérique ou HALS empêchent la dégradation du matériau en absorbant les radicaux libres et les hydropéroxydes formés dans le milieu sous l'action d'un rayonnement UV (Ultra Violet). A titre d'exemples d'amines à encombrement stérique susceptibles d'être utilisées dans le cadre de l'invention, on peut citer les produits commercialisés sous les dénominations Chimassorb® 2020, Tinuvin® 783, 770 et 765.

La composition selon l'invention peut également contenir un ou plusieurs additifs tels que des agents anti-bloquants, des agents absorbeurs UV, des agents plastifiants, des agents mouillants, des agents anti-mousses, des agents d'étalement, des résines tackifiantes.

Les résines tackifiantes susceptibles d'être utilisées dans le cadre de l'invention sont bien connues de l'homme du métier et peuvent être choisies notamment parmi les résines de colophane, les résines terpène-phénol, et les résines obtenues à partir de nappes pétrolières en C₅ et/ou C₉ qui peuvent ensuite être partiellement ou totalement hydrogénées. Ces résines ont avantageusement une température de ramollissement, mesurée selon la méthode « Ring and Bali » (norme ASTM E 28), inférieure ou égale à 140°C, généralement comprise dans la gamme de 75 à 140°C, de préférence dans la gamme de 75 à 125°C. A titre d'exemple, on peut citer les produits commercialisés sous la dénomination Escorez® (Exxon), Sylvares® (Arizona), Permalyn® (Eastman).

### Préparation de la composition:

Les compositions selon l'invention peuvent être préparées selon un procédé en une étape au cours de laquelle on mélange les ingrédients pour donner une composition homogène et réaliser les éventuelles réactions chimiques entre composants. Ces compositions peuvent être préparées en mélangeant les différents constituants par les moyens classiques de mise en oeuvre des thermoplastiques fortement chargés comme par exemple l'extrusion ou le malaxage. On peut utiliser un mélangeur interne, un co-malaxeur ou une extrudeuse bi-vis co-rotative. Préférentiellement, les compositions sont réalisées à une température supérieure ou égale à la température de fusion des constituants et inférieure à la température de début de décomposition de l'agent ignifugeant.

Des charges, en particulier minérales, peuvent être ajoutées pour améliorer la tenue thermomécanique de la composition. De façon non limitative, on donnera comme exemples la silice, l'alumine, le talc ou les carbonates de calcium ou les nanotubes de carbone. Avantageusement, on utilise des argiles modifiées ou non modifiées qui sont mélangées à l'ordre nanométrique ; ceci afin de satisfaire les exigences de certaines normes d'inflammabilité des matières plastiques, telle que l'UL94-V0 (auto-extinguible en 10 secondes maximum, sans goutte enflammée).

Des plastifiants peuvent être ajoutés afin de faciliter la mise en oeuvre et améliorer la productivité du procédé de fabrication de la composition et des structures. On peut citer comme exemples les huiles minérales paraffiniques aromatiques ou naphtaléniques. On peut également citer comme plastifiant les phtalates, azelates, adipates, le phosphate de ticrésyle.

On ne sortirait pas non plus du cadre de l'invention si on ajoutait aux compositions des agents « anti gouttes » comme des produits à base de silicone (PDMS) ou des produits fluorés comme le PTFE.

### Obtention des formulations testées :

Les formulations décrites ci-dessous sont préparées par extrusion grâce à un co-malaxeur de marque BÜSS PR46 de diamètre 46 millimètres, de longueur 15 fois son diamètre et équipé d'une mono-vis de reprise de diamètre 70 millimètres. La vis et les fourreaux du co-malaxeur sont chauffés respectivement à 100°C et 110°C alors que la mono-vis de reprise est chauffée à 150°C. Le débit d'extrusion est de 15kg/h (kilogrammes par heure) pour une vitesse de rotation du co-malaxeur de 285 trs/min (tours par minute). Les différents constituants (à l'exception de la charge ignifugeante) sont introduits dans la première trémie (trémie 1), la charge ignifugeante est introduite à parts égales dans les trémies 1 et 2.

Outre cette application en câblerie, la composition thermoplastique ignifuge selon l'invention trouve d'autres applications où son caractère de résistances au feu et ses bonnes propriétés mécanique, thermomécanique et de souplesse, sont requis. Ces compositions ont l'avantage d'être transformables en articles industriels (feuilles, plaques, profilés, corps creux, tuyaux), présentant une résistance au feu améliorée, par les techniques classiques de transformation des polyoléfines (extrusion, injection, roto-moulage).

### Matériaux employés pour former les formulations testées :

**ECOPIREN 3,5 :** Brucite (hydroxyde de Magnésium naturel), produite par la société RUSSIAN MINING CHEMICAL COMPANY et distribuée par la société Van MANNEKUS & Co BV., caractérisée par une distribution de taille de particule d50 = 3,5 microns (mesure en diffraction laser) avec un contenu d'hydroxyde de magnésium de 92 % environ.
**Orevac® 18340 :** Polyéthylène à basse densité linéaire greffé anhydride maléique, noté LLDPE-g-AM, produit par ARKEMA possédant un MFI (190°C, 2,16 kg mesuré selon ISO 1133) de 3 g/10 mn et une densité de 0,918.
**Evatane® 28-03 :** Copolymère d'éthylène et d'acétate de vinyle (28% en poids), noté EVA, produit par ARKEMA possédant un MFI (190°C, 2,16 kg mesuré selon ISO 1133) de 3 g/10 mn.
**Evatane® 28-800 :** Copolymère d'éthylène et d'acétate de vinyle (28% en poids), noté EVA, produit par ARKEMA possédant un MFI (190°C, 2,16 kg mesuré selon ISO 1133) de 800 g/10 mn.
**Lotader® 3210 :** Terpolymère d'éthylène, d'acrylate de butyle (6% en poids), et d'anhydride maléique (3,1% en poids), produit par ARKEMA possédant un MFI (190°C, 2,16 kg mesuré selon ISO 1133) de 5 g/10mn.
**LLDPE :** Polyéthylène à basse densité linéaire possédant un MFI (190°C, 2,16kg mesuré selon ISO 1133) de 1 g/10mn et une densité de 0,921.
**VLDPE :** Polyéthylène à très basse densité possédant un MFI (190°C, 2,16kg mesuré selon ISO 1133) de 1 g/10mn et une densité de 0,870.
**Antioxydant :** Antioxydant classique, par exemple de type phénolique.

La présente invention est illustrée plus en détail par les exemples non limitatifs suivants. Les compositions ci-dessous, qu'elles soient propres à l'invention ou selon l'art antérieur, comportent exactement le même taux ou pourcentage massique de charges ignifugeantes dans la composition afin de ne pas fausser les résultats des tests, excepté l'exemple DM7 n'entrant pas dans le cadre de l'invention. On choisi un pourcentage massique de 63 % de charges ignifugeantes (par rapport à la masse totale de la composition considérée) dans toutes les compositions testées ci-dessous, cette valeur correspondant sensiblement à la valeur habituelle pour les charges ignifugeantes.

Par ailleurs, pour comparer les exemples de l'invention vis-à-vis d'autres compositions thermoplastiques ignifuges (exemples 1 à 4), les exemples suivants de composition ont été proposés pour les tests ; étant entendu que les résultats reportés ci-dessous ne sont pas exhaustifs et que les études en laboratoire et pré-industriellement ont permis de déterminé plus précisément la composition thermoplastique ignifuge selon l'invention, ainsi que ses variantes préférées.

Exemple 1 : la composition intitulée « DM1 » est une formulation selon l'art antérieur. Elle comprend, en pourcentage massique 22% d'EVA, 9% de LLDPE et 5% de PE-greffé AM.

Exemple 2 : la composition intitulée « DM2 » est une formulation n'entrant pas dans le cadre de la présente invention pour laquelle la charge minérale précipitée de l'exemple DM1 est remplacée par la même quantité de charge minérale naturelle, le reste de la composition étant identique à la composition DM1 Elle comprend, en pourcentage massique 22% d'EVA, 9% de LLDPE et 5% de PE-greffé AM (AM = Anhydride Maléique).

Cette composition obtient des caractéristiques mécaniques notoirement insuffisantes.

Exemple 3 : la composition intitulée « DM3 » est une formulation n'entrant pas dans le cadre de la présente invention, cette composition comprenant un VLDPE non fonctionnalisé. Elle comprend, en pourcentage massique 27% d'EVA, 4% de VLDPE et 5% de PE-greffé AM.

Cette composition est caractérisée par une viscosité très élevée (MFI < 1,5 g.10 min⁻¹ à 150°c 21,6 kg) qui ne permet pas d'obtenir la qualité de revêtement recherchée dans les applications sus-décrites comme le revêtement optimal de câbles de faibles sections par exemple.

Exemple 4 : la composition intitulée « DM4 » est une formulation n'entrant pas dans le cadre de la présente invention, cette composition comprenant un VLDPE non fonctionnalisé. Elle comprend, en pourcentage massique 13 % d'EVA, 17 % de VLDPE et 6 % de PE-greffé AM.

Cette composition est caractérisée par un LOI très insuffisant (propriétés ignifuges insuffisantes) pour les applications envisagées.

Exemple 5 : la composition intitulée « DM5 » est une formulation entrant dans le cadre de la présente invention, cette composition comprenant un EVA fluide de MFI 800. Elle comprend, en pourcentage massique 16 % d'EVA, 9 % de VLDPE, 5% d'EVA fluide et 6 % de PE-g-AM (= Polyéthylène greffé Anhydride Maléique).

Exemple 6 : la composition intitulée « DM6 » est une formulation entrant dans le cadre de la présente invention, cette composition comprenant un terpolymère d'éthylène-butyl acrylate anhydride maléique LOTADER®. Elle comprend, en pourcentage massique 20 % d'EVA, 9 % de VLDPE, 3% de LOTADER® et 4 % de PE-g-AM.

Exemple 7 : la composition intitulée « DM7 » est une formulation n'entrant pas dans le cadre de la présente invention. Cette composition ne comprenant pas d'EVA fluide, comprend un taux plus élevé de charge minérale naturelle et de VLDPE qui ne permet pas d'atteindre les caractéristiques mécaniques suffisantes. Elle comprend, en pourcentage massique 8 % d'EVA, 20 % de VLDPE, 66% de charge minérale naturelle et 5 % de PE-g-AM.

Exemple 8 : la composition intitulée « DM8 » est une formulation entrant dans le cadre de la présente invention. Elle comprend, en pourcentage massique 18,5 % d'EVA, 10 % de VLDPE, 1,5% d'EVA fluide (MFI 800) et 6 % de PE-g-AM.

Exemple 9 : la composition intitulée « DM9 » est une formulation entrant dans le cadre de la présente invention. Elle comprend, en pourcentage massique 15 % d'EVA, 15 % de VLDPE, 2% d'EVA fluide (MFI 800) et 4,5% de PE-g-AM.

Exemple 10 : la composition intitulée « DM10 » est une formulation n'entrant pas dans le cadre de la présente invention, la composition comprenant un pourcentage massique trop élevé d'EVA fluide qui dégrade trop fortement les caractéristiques mécaniques, la contrainte rupture plus particulièrement. Elle comprend, en pourcentage massique 16 % d'EVA, 8 % de VLDPE, 7% d'EVA fluide(MFI800) et 5 % de PE-g-AM.

Exemple 11 : la composition intitulée « DM11 » est une formulation n'entrant pas dans le cadre de la présente invention, cette composition comprenant un pourcentage massique trop faible de PE-g-AM. Elle comprend, en pourcentage massique 25 % d'EVA, 8 % de VLDPE, 1,5% d'EVA fluide (MFI 800) et 1,5 % de PE-g-AM. Exemple 12 : la composition intitulée « DM12 » est une formulation entrant dans le cadre de la présente invention. Elle comprend, en pourcentage massique 24.5 % d'EVA, 6.5 % de VLDPE, 2% d'EVA fluide (MFI 800) et 3,5 % de PE-g-AM

### Tests effectués sur les matériaux :

Les granulés ou composants sont mis en forme grâce à une extrudeuse double vis contrarotative de laboratoire de type ThermoHaake Rheocord® System 40 équipée d'une filière plate ; l'extrudeuse étant chauffée à 150°C pour obtenir des bandes à partir desquelles seront découpées les éprouvettes nécessaires afin de caractériser ou tester les matériaux.

Les premiers tests présentent les propriétés mécaniques des différents matériaux testés, en termes d'allongement et de contrainte à la rupture, mesurés selon la norme ISO R527 : 93-1BA, après conditionnement de ces matériaux pendant 48H dans un milieu présentant 50% d'humidité relative (HR = 50).

Les éprouvettes sont également soumises à un test permettant de mesurer l'Indice Limite d'oxygène (LOI) : pour cela, on réalise le test selon la norme ISO 4589.

Enfin, la viscosité de chaque éprouvette est mesurée selon la norme Cette méthode traditionnelle et relativement simple, décrite dans la norme ASTM D1238. Il s'agit d'une méthode thermomécanique en sollicitation statique. En effet, une perturbation (pour ce test, une pression) constante est appliquée à la matière, à une température donnée.

L'indice de fluidité, ou grade MFI, à chaud, mesure, en unités arbitraires, la masse écoulée à travers une filière cylindrique d'une matière thermoplastique à l'état « fondu » (état fluide ou déformable), dans des conditions définies de température et de pression.

Tous ces tests sont réalisés de façon classique en prenant des éprouvettes standards de forme identique pour chaque composition testée et en leur faisant subir chaque test sur banc d'essai, selon les définitions (forme, dimensions, vitesses d'essai, étalonnage de la machine, exactitude des appareils etc.) données par les normes internationales et bien connues de l'homme du métier.

Résultats des tests réalisés sur les éprouvettes des différentes formulations :

**¹ L'expression « EVA fluide » signifie qu'il s'agit d'un EVA présentant un MFI supérieur à 60 g.10min⁻¹ à 190°C sous 2,16 kg**

| | DM1 | DM2 | DM3 | DM4 | DM5 | DM6 | DM7 | DM8 | DM9 | DM10 | DM11 | DM12 |
|---|---|---|---|---|---|---|---|---|---|---|---|---|
| taux charges ignifuges naturelles (%) | | 63 | 63 | 63 | 63 | 63 | 67 | 63 | 63 | 63 | 63 | 63 |
| taux d'EVA ou Lotryl® (%) | 22 | 22 | 27 | 13 | 16 | 20 | 7 | 18,5 | 15 | 16 | 25 | 24,5 |
| taux LLDPE (%) | 9 | 9 | | | | | | | | | | |
| taux VLDPE (%) | | | 4 | 17 | 9 | 9 | 20 | 10 | 15 | 8 | 8 | 6.5 |
| taux EVA fluide¹ ou Lotader (%) | | | | | 6 | 3 | 0 | 1.5 | 2 | 7 | 1,5 | 2 |
| taux agent de couplage (%) | 5 | 5 | 5 | 6 | 4 | 4 | 5 | 6 | 4,5 | 5 | 1,5 | 3,5 |
| taux de charges ignifuges précipités (%) | 63 | | | | | | | | | | | |
| autre composant (%) | 1 | 1 | 1 | 1 | 1 | 1 | 1 | 1 | 0,5 | 1 | 1 | 0,5 |
| allongement rupture (%) | 185 | 60 | 90 | 190 | 165 | 170 | 110 | 170 | 175 | 140 | 80 | 165 |
| contrainte rupture (MPa) | 13 | 15 | 14 | 12 | 12 | 13 | 16 | 12,5 | 12 | 9 | 14 | 13,5 |
| viscosité | 3,5 | 1 | 1 | 3,5 | 3 | 3,5 | 1,5 | 3 | 3 | 5 | 2 | 2,5 |
| LOI(%) | 37 | 36 | 37 | 29 | 36,5 | 37 | 33 | 37 | 35 | 36 | 36,5 | 37 |

## Revendications

1. Composition thermoplastique ignifugée sans halogène **caractérisée en ce qu'**elle consiste en :
- 50 % à 75 % en poids de charges ignifugeantes,
- 15 % à 40 % en poids d'un copolymère d'éthylène et d'un monomère éthylénique portant une fonction polaire,
- 5 % à 15 % en poids d'un polyéthylène non fonctionnalisé consistant en un polyéthylène à très basse densité (VLDPE) présentant une densité comprise entre 0,85 et 0,91,
- et 1,5 % à 6 % en poids d'un copolymère d'éthylène et d'un monomère éthylénique portant une fonction polaire ayant une MFI supérieure à 60 g.10 min⁻¹ à 190°C sous 2,16 kg ou d'un copolymère d'éthylène et d'un monomère éthylénique portant une fonction polaire et comportant une pluralité de greffons d'anhydride maléique,
- de 2 % à 15 % en poids d'un agent de couplage comprenant, de préférence consistant en, une polyoléfine greffée anhydride maléique et/ou un terpolymère éthylène-acrylate-anhydride maléique,
- optionnellement, jusqu'à 5% en poids d'additifs fonctionnels,
**caractérisée en ce que** les charges ignifugeantes sont des charges minérales hydratées naturelles choisies parmi la gibbsite (hydroxyde d'aluminium), l'hydromagnésite, la dawsonite, la brucite (hydroxyde de magnésium), le subhydrate carbonate de magnésium, la boehmite, l'hydroxyde de calcium ou la huntite ou un mélange de ces composés.

2. Composition selon la revendication 1, **caractérisée en ce que** la polyoléfine greffée de l'agent de couplage consiste en un polyéthylène choisi parmi les VLDPE, LLDPE, LDPE, MDPE, HDPE ou un copolymère éthylénique portant une fonction polaire ou un polypropylène homopolymère ou copolymère d'éthylène.

3. Composition selon la revendication 2, **caractérisée en ce que** le taux de greffage de l'anhydride maléique sur la polyoléfine varie de 0,25% à 4% en masse de la polyoléfine greffé.

4. Composition selon l'une quelconque des revendications précédentes, **caractérisée en ce que** le copolymère d'éthylène et d'un monomère éthylénique portant une fonction polaire est présente dans la composition entre 15 % et 28 % en poids, de préférence entre 20 % et 25 %.

5. Composition selon l'une quelconque des revendications précédentes, **caractérisée en ce que** le susdit polyéthylène non fonctionnalisé est compris entre 4 % et 12 % en poids de la composition, de préférence entre 6 % et 10 %.

6. Composition selon l'une quelconque des revendications précédentes, **caractérisée en ce que** les différents susdits monomères éthyléniques portant une fonction polaire comprennent tous de 3 à 20 atomes de carbone, préférentiellement de 4 à 8 atomes.

7. Composition selon l'une quelconque des revendications précédentes, **caractérisée en ce que** le susdit monomère éthylénique portant une fonction polaire est choisi parmi les esters vinyliques d'acide carboxylique saturé, les acides carboxyliques insaturés ou les esters (méth)acryliques d'acide carboxylique insaturé.

8. Composition selon l'une quelconque des revendications précédentes, **caractérisée en ce que** les additifs sont choisis parmi les agents antivieillissements, antioxydants, protecteurs solaires, antibloquants, absorbeurs UV, plastifiants, mouillants, anti-mousse, d'étalement et/ou tackifiant.

9. Composition selon l'une quelconque des revendications précédentes, **caractérisée en ce que** les susdites charges ignifugeantes représentent plus de 60 % en poids de la composition.

10. Câble ou tuyau présentant au moins deux couches dont au moins une couche est formée par la susdite composition thermoplastique selon l'une quelconque des revendications 1 à 9.

## Patentansprüche

1. Halogenfreie flammfeste thermoplastische Zusammensetzung, **dadurch gekennzeichnet, dass** sie aus Folgendem besteht:
- 50 % bis 75 % nach Gewicht an flammfest machenden Füllstoffen,
- 15 % bis 40 % nach Gewicht eines Copolymers aus Ethylen und einem ethylenischen Monomer, das mit einer polaren funktionellen Gruppe versehen ist,
- 5 % bis 15 % nach Gewicht eines Polyethylens, das mit keinerlei funktionellen Gruppen versehen ist und aus einem Polyethylen sehr niedriger Dichte (VLDPE) besteht, welches eine Dichte im Bereich von 0,85 bis 0,91 aufweist,
- und 1,5 % bis 6 % nach Gewicht eines Copolymers aus Ethylen und einem ethylenischen Monomer, das mit einer polaren funktionellen Gruppe versehen ist und einen MFI von mehr als 60 g.10 min⁻¹ bei 190 °C unter 2,16 kg hat, oder eines Copolymers aus Ethylen und einem ethylenischen Monomer, das mit einer polaren funktionellen Gruppe versehen ist und mehrere aufgepfropfte Maleinsäureanhydridgruppen aufweist,
- 2 % bis 15 % nach Gewicht eines Kupplungsmittels, welches ein Maleinsäureanhydrid-Pfropfpolyolefin und/oder ein Ethylen-Acrylat-Maleinsäureanhydrid-Terpolymer umfasst, wobei es vorzugsweise daraus besteht,
- möglicherweise bis zu 5 Gewichts-% an funktionsspezifischen Zusatzstoffen,
**dadurch gekennzeichnet, dass** es sich bei den flammfest machenden Füllstoffen um natürliche mineralische Füllstoffe in Hydratform handelt, die aus Gibbsit (Aluminiumhydroxid), Hydromagnesit, Dawsonit, Brucit (Magnesiumhydroxid), Magnesiumcarbonat-Subhydrat, Boehmit, Calciumhydroxid oder Huntit oder einer Mischung dieser Verbindungen ausgewählt sind.

2. Zusammensetzung nach Anspruch 1, **dadurch gekennzeichnet, dass** das Pfropfpolyolefin des Kupplungsmittels einem Polyethylen, das aus VLDPE, LLDPE, LDPE, MDPE, HDPE ausgewählt ist, oder einem ethylenbasierten Copolymer, das mit einer funktionellen polaren Gruppe versehen ist, oder einem Polypropylenhomopolymer oder Ethylencopolymer entspricht.

3. Zusammensetzung nach Anspruch 2, **dadurch gekennzeichnet, dass** der Massenanteil der Pfropfung des Maleinsäureanhydrids auf das Polyolefin im Bereich von 0,25 % bis 4 % liegt, bezogen auf das Pfropfpolyolefin.

4. Zusammensetzung nach einem beliebigen der vorhergehenden Ansprüche, **dadurch gekennzeichnet, dass** das Copolymer aus Ethylen und einem ethylenischen Monomer, welches mit einer polaren funktionellen Gruppe versehen ist, zwischen 15 % und 28 % nach Gewicht, vorzugsweise zwischen 20 % und 25 %, der Zusammensetzung ausmacht.

5. Zusammensetzung nach einem beliebigen der vorhergehenden Ansprüche, **dadurch gekennzeichnet, dass** das oben genannte Polyethylen, welches mit keinerlei funktionellen Gruppen versehen ist, zwischen 4 % und 12 % nach Gewicht, vorzugsweise zwischen 6 % und 10 %, der Zusammensetzung ausmacht.

6. Zusammensetzung nach einem beliebigen der vorhergehenden Ansprüche, **dadurch gekennzeichnet, dass** sämtliche der verschiedenartigen oben genannten ethylenischen Monomere, welche mit einer polaren funktionellen Gruppe versehen sind, 3 bis 20 Kohlenstoffatome, vorzugsweise 4 bis 8 Atome, umfassen.

7. Zusammensetzung nach einem beliebigen der vorhergehenden Ansprüche, **dadurch gekennzeichnet, dass** das oben genannte ethylenische Monomer, welches mit einer polaren funktionellen Gruppe versehen ist, aus den Vinylestern gesättigter Carbonsäuren, den ungesättigten Carbonsäuren oder den (Meth)acrylsäureestern ungesättigter Carbonsäuren ausgewählt ist.

8. Zusammensetzung nach einem beliebigen der vorhergehenden Ansprüche, **dadurch gekennzeichnet, dass** die Zusatzstoffe aus den alterungshemmenden Mitteln, den Antioxidantien, den Sonnenschutzmitteln, den Antiblockmitteln, den UV-Filtern, den Weichmachern, den Netzmitteln, den Schaumverhütern, den Spreitmitteln und/oder einem Klebrigmacher ausgewählt sind.

9. Zusammensetzung nach einem beliebigen der vorhergehenden Ansprüche, **dadurch gekennzeichnet, dass** die oben genannten flammfest machenden Füllstoffe mehr als 60 Gewichts-% der Zusammensetzung ausmachen.

10. Kabel oder Rohr, das mindestens zwei Schichten aufweist, wobei mindestens eine Schicht davon aus der oben genannten thermoplastischen Zusammensetzung nach einem beliebigen der Ansprüche 1 bis 9 gebildet ist.

## Claims

1. Halogen-free fire-retardant thermoplastic composition **characterized in that** it consists of:
- 50% to 75% by weight of fire-retardant fillers,
- 15% to 40% by weight of a copolymer of ethylene and of an ethylenic monomer bearing a polar function,
- 5% to 15% by weight of a non-functionalized polyethylene consisting of a very low density polyethylene (VLDPE) having a density of between 0.85 and 0.91,
- and 1.5% to 6% by weight of a copolymer of ethylene and of an ethylenic monomer bearing a polar function having an MFI of greater than 60 g.10 min⁻¹ at 190°C under 2.16 kg or of a copolymer of ethylene and of an ethylenic monomer bearing a polar function and comprising a plurality of maleic anhydride grafts,
- from 2% to 15% by weight of a coupling agent comprising, preferably consisting of, a maleic anhydride-grafted polyolefin and/or an ethylene/acrylate/maleic anhydride terpolymer,
- optionally, up to 5% by weight of functional additives,
**characterized in that** the fire-retardant fillers are natural hydrated mineral fillers chosen from gibbsite (aluminium hydroxide), hydromagnesite, dawsonite, brucite (magnesium hydroxide), magnesium carbonate subhydrate, boehmite, calcium hydroxide or huntite or a mixture of these compounds.

2. Composition according to Claim 1, **characterized in that** the grafted polyolefin of the coupling agent consists of a polyethylene chosen from VLDPE, LLDPE, LDPE, MDPE, HDPE or an ethylene copolymer bearing a polar function or a polypropylene homopolymer or ethylene copolymer.

3. Composition according to Claim 2, **characterized in that** the degree of grafting of the maleic anhydride to the polyolefin varies from 0.25% to 4% by weight of the grafted polyolefin.

4. Composition according to any one of the preceding claims, **characterized in that** the copolymer of ethylene and of an ethylenic monomer bearing a polar function is present in the composition at between 15% and 28% by weight, preferably between 20% and 25%.

5. Composition according to any one of the preceding claims, **characterized in that** the abovementioned non-functionalized polyethylene is between 4% and 12% by weight of the composition, preferably between 6% and 10%.

6. Composition according to any one of the preceding claims, **characterized in that** the various abovementioned ethylenic monomers bearing a polar function all comprise from 3 to 20 carbon atoms, preferentially from 4 to 8 atoms.

7. Composition according to any one of the preceding claims, **characterized in that** the abovementioned ethylenic monomer bearing a polar function is chosen from saturated carboxylic acid vinyl esters, unsaturated carboxylic acids or unsaturated carboxylic acid (meth)acrylic esters.

8. Composition according to any one of the preceding claims, **characterized in that** the additives are chosen from anti-ageing agents, antioxidants, solar protectors, antiblocking agents, UV absorbers, plasticizers, wetting agents, antifoaming agents, spreading agents and/or tackifiers.

9. Composition according to any one of the preceding claims, **characterized in that** the abovementioned fire-retardant fillers represent more than 60% by weight of the composition.

10. Cable or pipe having at least two layers, at least one layer of which is formed by the abovementioned thermoplastic composition according to any one of Claims 1 to 9.
